# EUROPEAN PATENT APPLICATION

(11) **EP 4 617 315 A1**
(43) Date of publication of application: **17.09.2025**
(21) Application number: 25162714.7
(22) Date of filing: 10.03.2025
(51) Int. Cl.: C08L 53/02, C08L 67/02, C08L 77/02, C08L 77/06, C08L 81/04

(54) **THERMOPLASTIC POLYMER COMPOSITIONS**

(30) Priority: 13.03.2024 US 202463564536 P
(71) Applicant: Kraton Polymers Nederland B.V., 1322 CE Almere (NL)
(72) Inventor: Dharmarajan, Narayanaswami, Houston, 77084 (US); Bhattacharya, Aparajita, Houston, 77084 (US); Raghavendran, Venkat, Houston, 77084 (US); Truong, Phuc, Houston, 77084 (US)
(74) Representative: Henkel & Partner mbB

(57) **Abstract**

The disclosure relates to a thermoplastic polymer composition comprising: an epoxidized product of a hydrogenated styrenic block copolymer (HSBC), an engineering thermoplastic, optionally an oil extended HSBC, and optional additives. The HSBC includes at least one block "S" composed of vinyl aromatic units and at least one block "R" composed of hydrogenated diene units. The epoxidized HSBC contains 1 to 35 wt.% epoxy functional groups and has a residual unsaturation (RU) of 0.05 to 20 meq/g. This thermoplastic polymer composition offers improved impact resistance and processability and is suitable for producing molded articles.

## Description

### FIELD

The disclosure relates to a thermoplastic polymer composition, methods of preparation, and applications thereof.

### BACKGROUND

Engineering thermoplastics possess advantageous properties, including heat resistance, chemical resistance, electrical insulation, dimensional stability, etc., and can be used in a number of applications, such as automotive, oilfield, air conditioning, and so on. Engineering thermoplastics are also finding increasing use in the electrical and electronics industries. However, despite their interesting properties, these polymers have limitations due to their intrinsically brittle nature.

Impact modifiers are recognized for their ability to balance the toughness, stiffness, and processability of inherently stiff polymers. Various impact modifiers are known in the field for blending with engineering thermoplastics to improve mechanical properties. Styrenic block copolymers (SBCs) have been used as impact modifiers. The modification of SBCs can be finely adjusted to facilitate blending with a particular class of engineering thermoplastics.

There is still a need for improved thermoplastic polymer compositions with enhanced impact strength and a balance of other mechanical properties, achieved through the incorporation of a suitable SBC as an impact modifier.

### SUMMARY

In one aspect, the disclosure relates to a thermoplastic polymer composition comprising, consisting essentially of, or consists of: (a) 2 to 40 wt.% of an epoxidized product of a hydrogenated styrenic block copolymer (HSBC), (b) 60 to 98 wt.% of an engineering thermoplastic, and (c) up to 10 wt.% of at least an additive, all weight percentages are based on total weight of the thermoplastic polymer composition. The HSBC has a general structure selected from S-R, S-R-S, S-R-S-R, (S-R-S)ₙX, (S-R)ₙX, and mixtures thereof. Each block "S" is composed of vinyl aromatic units, each block "R" is composed of hydrogenated diene units, X is residue of a coupling agent, and n ≥ 2. The epoxidized hydrogenated styrenic block copolymer (e-HSBC) contains 1 to 35 wt.% epoxy functional groups, based on total weight of the block "R," and has a residual unsaturation (RU) of 0.05 to 20 meq/g. The engineering thermoplastic is selected from the group consisting of polyamide, polyphenylene oxide, polyethylene terephthalate, polytrimethylene terephthalate, polybutylene terephthalate, polyphthalamide, polyimides, polyetherimide, liquid crystal polymer, polycarbonate, polymethylmethacrylate, acrylonitrile butadiene styrene, polyoxymethylene, styrene-acrylonitrile, polyetherketone, polyetheretherketone, polyketone, polysulphone, and mixtures thereof. In embodiments, the thermoplastic polymer composition further comprises (d) up to 20 wt.% of an oil extended hydrogenated styrenic block copolymer.

In a second aspect, the thermoplastic polymer composition has a Notched Izod impact of > 2 KJ/m², measured at 21°C according to ASTM D256; and a flexural modulus of > 1.5 GPa, measured according to ASTM D790.

In a third aspect, the thermoplastic polymer composition has a tensile strength at break of > 40 GPa; an elongation at yield of > 4%; and an elongation at break of > 4%, all are measured according to ASTM D638

In a fourth aspect, the block "R" is selected from any of E/B, EP/MB, and E/B/EP/MB. Each block E/B composed of ethylene ("E") units and butylene ("B") units; each block EP/MB composed of ethylene-propylene (EP) units and methylene-butylene (MB) units; and each block E/B/EP/MB composed of ethylene ("E") units, butylene ("B") units, ethylene-propylene (EP) units, and methylene-butylene (MB) units.

### DESCRIPTION

The following terms will have the following meanings:

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Butylene unit content" refers to the content, in weight %, of the butylene units ("B") in a hydrogenated block copolymer. The butylene units are obtained / formed by polymerization of 1,3-butadiene monomer via 1,2-addition, followed by hydrogenation. The 1,3-butadiene monomer can also polymerize through 1,4-addition, which upon hydrogenation results in ethylene units ("E"). Both butylene and ethylene units can be part of the hydrogenated block copolymer which can also contain vinyl aromatic units and/or ethylene-propylene units in any order. The butylene unit content can be measured by ¹H NMR and ¹³C NMR.

"Coupling efficiency (CE)" refers to the weight of coupled polymer molecules divided by the total weight of both coupled and uncoupled polymer molecules, expressed as a percentage (%). CE can be used to determine the amount of diblock or more generally of "uncoupled arms" content in the overall block copolymer. For example, if the coupling efficiency is 80%, the polymer will contain 20 wt.% diblock or uncoupled arms and 80 wt.% triblock and multi-arm species.

"Vinyl aromatic unit content" or VAC of a block copolymer refers to the weight % of polymerized vinyl aromatic monomers, e.g., styrene, para-methylstyrene, etc., in the block copolymer, calculated by dividing the sum of molecular weight of all vinyl aromatic units by total molecular weight of the block copolymer. VAC can be determined using proton nuclear magnetic resonance spectroscopy (¹H NMR) and ¹³C NMR. VAC sometimes is used interchangeably with PSC, or polystyrene content.

"Molecular weight" or M_{w} refers to the styrene equivalent molecular weight in kg/mol of a polymer block or a block copolymer. M_{w} can be measured with gel permeation chromatography (GPC) using polystyrene calibration standards, such as is done according to ASTM 5296. The GPC detector can be an ultraviolet or refractive index detector or a combination thereof. The chromatograph is calibrated using commercially available polystyrene molecular weight standards. M_{w} of polymers measured using GPC so calibrated are styrene equivalent molecular weights or apparent molecular weights. M_{w} expressed herein is measured at the peak of the GPC trace and is commonly referred to as styrene equivalent "peak molecular weight," designated as Mₚ.

"HSBC" refers to a hydrogenated styrenic block copolymer. The HSBC is derived from the polymerization of 1,3-butadiene and/or isoprene with vinyl aromatic monomers. In HSBC, a substantial proportion of the double bonds originating from the 1,3-butadiene and/or isoprene units are hydrogenated, achieving a hydrogenation level exceeding 80%, or 90%, or even 99%. The aromatic bonds, however, are hydrogenated to a level ranging from 0% to 15%.

"Hydrogenation level" refers to the level (in percentage) of saturation of the double bonds (e.g., olefinic, aromatic, etc.) into a block copolymer, can be measured by ¹H NMR.

"Residual unsaturation" or RU refers to the levels of unsaturation, i.e., carbon-carbon double bonds per gram of a block copolymer. RU can be measured using ¹H NMR or ozonolysis titration.

"Unit" refers to the structural building block derived from one or more polymerized monomers, representing the repeating entity that forms part of the polymer or copolymer chain. Unlike a "monomer," which is the individual molecule before polymerization, a "unit" is the transformed version of the monomer after undergoing the polymerization process.

"Polydispersity index" or PDI refers to a ratio of a weight average molecular weight (M_{w}) to a number average molecular weight (Mₙ), sometimes also called as molecular weight distribution. PDI is used to indicate distribution of polymer chain molecular weights in a given polymer.

Epoxidized HSBC (e-HSBC), or epoxy-grafted HSBC, or epoxy-functionalized HSBC, are terms used interchangeably to describe a composition in which epoxy groups are grafted onto the backbone or the vinyl group adjacent to the backbone of a hydrogenated styrenic block copolymer (HSBC).

"Oil-extended HSBC" or OE-HSBC refers to a HSBC polymer material (or HSBC) prepared by combining a specific amount of the HSBC with a predetermined quantity of oil (a weight ratio of HSBC to oil can be from 1:5 to 5:1), mixing the components, and allowing the mixture to soak for a set period (e.g., 24 hours at room temperature) to enable the HSBC to absorb the oil. This mixture, referred to as OE-HSBC, is used in formulations to improve their processability.

The disclosure relates to a thermoplastic polymer composition containing an epoxidized product of a hydrogenated styrenic block copolymer (HSBC), an engineering thermoplastic, optionally an oil extended hydrogenated styrenic block copolymer (OE-HSBC), and optional additives. This composition offers enhanced impact resistance and improved processability, making it suitable for the production of molded articles.

(Epoxidized Hydrogenated Styrenic Block Copolymer (e-HSBC)): The e-HSBC is obtained by epoxidizing or grafting a HSBC, with an epoxidizing agent, wherein the available unsaturated double bonds (all or some) of the diene units in the HSBC are epoxidized. Standard analytical techniques including ¹H NMR can be used to detect / analyze the e-HSBC structure. The HSBC has a hydrogenation level of 50 - 90% before epoxidizing, forming the e-HSBC.

The HSBC can be any triblock, tetrablock, pentablock, and mixtures thereof; and any of a linear or branched (multi-arm) block copolymer, comprising at least one block "S" composed of vinyl aromatic units; and at least one rubbery block "R" (block "R") composed of hydrogenated diene units and optionally vinal aromatic units. The vinyl aromatic units are derived from polymerized vinyl aromatic monomers, while the hydrogenated diene units, prior to hydrogenation, are derived from polymerized diene monomers.

In embodiments, the vinyl aromatic monomer is selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, the block "R" is selected from poly(isoprene-r-butadiene) and poly(butadiene-r-styrene), wherein -r- refers to a random copolymer, e.g., "poly(isoprene-r-butadiene)" means polyisoprene butadiene random copolymer.

In embodiments, each block "R" is a block selected from E/B, EP/MB, E/B/EP/MB, and combinations thereof.

In embodiments, block "R" is a block E/B composed of ethylene ("E") units and butylene ("B") units which are hydrogenated 1,4-butadiene units and hydrogenated 1,2-butadiene units, respectively.

In embodiments, block "R" is a block EP/MB composed of ethylene-propylene (EP) units and methylene-butylene (MB) units. Each EP unit is a hydrogenated 1,4-isoprene unit and each MB unit is a hydrogenated 3,4-isoprene unit and/or a hydrogenated 1,2-isoprene unit. In embodiments, the methylene-butylene (MB) units are present in the block EP/MB in amounts of < 10, or < 8, or < 5 wt.%, based on total weight of the block EP/MB.

In embodiments, block "R" is a block E/B/EP/MB composed of ethylene ("E") units, butylene ("B") units, ethylene-propylene (EP) units, and methylene-butylene (MB) units.

In embodiments, the HSBC has a general structure selected from: S-R, S-R-S, S-R-S-R, (S-R-S)ₙX, (S-R)ₙX, and mixtures thereof; X is residue of a coupling agent, and n ≥ 2 or 1 - 20, or 1 - 10, or 1 - 7.

In embodiments, the coupling agent includes bi- or polyfunctional compounds, for example divinylbenzene, halides of aliphatic or araliphatic hydrocarbons, such as 1,2-dibromoethane, bis(chloromethyl)benzene, silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane, methyltriethoxysilane, tetramethoxysilane, dimethyladipate, gamma-glycidoxypropyltrimethoxy silane, and mixtures thereof. In embodiments, the HSBC has a coupling efficiency (CE) of > 10%, or > 20%, or 10 - 100%, or 20 - 95%, or 70 - 95%, > 90%, or 80 - 98%, or 85 - 95%.

In embodiments, each block E/B has a butylene unit ("B") content of 15 - 80, or 20 - 75, or 25 - 70, or 30 - 65, or 15 - 65, or 30 - 80, or 25 - 40, or 50 - 70, or > 20, or > 25, or > 30, or < 80 wt.%, based on total weight of the block E/B.

In embodiments, the e-HSBC comprises a mixture of different epoxidized block copolymers, e.g., a mixture of e-USBC (epoxidized unhydrogenated SBC) and e-HSBC, or a mixture of different e-HSBCs, etc.

In embodiments, the e-HSBC comprises a mixture of different e-HSBCs, with a first e-HSBC having a low butylene unit ("B") content and a second e-HSBC having a high butylene unit ("B") content. Low butylene unit ("B") content means the e-HSBC having a butylene unit ("B") content of < 45, or < 40, or < 42, or < 38, or > 10, or 10 - 45, or 20 - 42, or 25 - 45 wt.%. High butylene unit ("B") content means the e-HSBC having a butylene unit ("B") content of > 45, or > 48, or > 50, or < 80, or 45 - 80, or 48 - 75, or 50 - 70 wt.%. In embodiments, the mixture of the first e-HSBC and the second e-HSBC is in a weight ratio of 1:10 to 10:1, or 1:8 to 8:1, or 1:5 to 5:1, or 1:3 to 3:1.

In embodiments, each block "S" in the e-HSBC has a hydrogenation level of < 30%, or < 20%, or < 10%, or < 5%, based on total double bonds present in the block "S".

In embodiments, each block "S" has a Mₚ of 5 - 50, or 10 - 45, or 15 - 40, or 20 - 35, or 5 - 30, or 20 - 50, or 3 - 20, or 5 - 15, or 4 - 12, or 3 - 10, or < 60, or < 50, or < 15, or > 3, or > 10 kg/mol.

In embodiments, the HSBC has a Mₚ of 100 - 500, or 150 - 450, or 200 - 400, or 100 - 300, or 220 - 350, or 220 - 500, or 20 - 300, or 30 - 250, or 40 - 200, or 50 - 150, or 20 - 120, or 40 - 110, or < 280, or > 30 kg/mol.

In embodiments, the HSBC has a total VAC of 10 - 50, or 15 - 45, or 20 - 40, or 25 - 35, or 10 - 35, or 25 - 50, or < 50, or > 15 wt.%, based on total weight of the HSBC.

In embodiments, diene units in each block "R" have a hydrogenation level of > 50%, or > 55%, or > 60%, or > 65%, or > 80%, or > 85%, or > 90%, or > 95%, or > 98%, or > 99%, or up to 100%, or < 90%, or 50 - 90%, or 55 - 85%, or 60 - 80%, or 65 - 90%, or 50 - 75%, or 80 - 99%, or 85 - 98, or 90 - 99%.

In embodiments, the HSBC has a residual unsaturation (RU) of < 20, or < 15, or < 10, or < 8, or < 5, or < 0.4, or < 0.3, or < 0.2, or > 0.001, or > 0.01, or 0.01 - 20, or 0.1 - 10, or 0.5 - 8, or 1 - 5, or 0 - 0.5, or 0 - 0.2, or 0.001 - 0.2 meq/g.

In embodiments, the e-HSBC has a residual unsaturation (RU) of < 20, or < 15, or < 10, or < 8, or < 5, or > 0.01, or 0.05 - 20, or 0.1 - 10, or 0.58, or 1 - 5, meq/g.

In embodiments, the HSBC is epoxidized using known methods, such as treatment with a peracid (e.g., peracetic acid), hydrogen peroxide in the presence of acetic acid and sulfuric acid, or hydrogen peroxide combined with a low molecular weight fatty acid, such as formic acid.

In embodiments, the peroxides used as functionalization / epoxidizing agent include per-carboxylic acids such as performic acid, peracetic acid, perpropionic acid, 3-chloroperoxybenzoic acid, potassium peroxymonosulfate, and mixtures thereof.

In embodiments, the e-HSBC has epoxy functional groups in amounts of 1 - 35, or 3 - 30, or 4 - 25, or 3 - 22 wt.%, based on total weight of the diene units in the block "R".

In embodiments, the e-HSBC has a degree of epoxidation of up to 100%, or 15 - 99%, or 10 - 92%, or 40 - 80%, or 55 - 95%, or 60 - 85%, or > 50% relative to the polymer block susceptible to functionalization (i.e., epoxidation).

In embodiments, diene units in each block "R" are epoxidized at aliphatic double bonds. The amount of epoxy functional groups in e-HSBC is from 0.05 - 20, or 0.1 - 15, or 0.5 - 12, or 1 - 10, or 1.5 - 8, or > 0.1, or < 20 mmol/g, relative to per gram of the HSBC. The amount of epoxy functional groups in e-HSBC can be measured by titration or 1HNMR.

In embodiments, the e-HSBC is present in an amount of 2 - 40, or 10 - 40, or 5 - 40, or 5 - 35, or 10 - 35, or 5 - 32 wt.%, based on total weight of the thermoplastic polymer composition.

(Engineering Thermoplastics): In embodiments, the engineering thermoplastic is selected from the group consisting of polyamide (PA), polyphenylene oxide (PPO), polyethylene terephthalate (PET), polytrimethylene terephthalate (PTT), polybutylene terephthalate (PBT), polyphthalamide (PPA), polyimides (PI), polyetherimide (PEI), liquid crystal polymer (LCP), polycarbonate (PC), polymethylmethacrylate (PMMA), acrylonitrile butadiene styrene (ABN), polyoxymethylene (POM), styrene-acrylonitrile (SAN), polyetherketones (PEK), polyetheretherketone (PEEK), polyketones (PK), polysulphones (PSU), polyphenylene sulfide (PPS), and mixtures thereof.

In embodiments, the engineering thermoplastic is a blend of two engineering thermoplastics selected from any of: PPO and PPS; PA and PPS; PA and PET; PA and PPO; PA and PTT; and PA and PBT. The blend can have a weight of the two engineering thermoplastics ranging from 1:5 to 5:1, or 1:3 to 3:1 or 1:1.

In embodiments, the engineering thermoplastic is a blend of two engineering thermoplastics selected from any of: PPO and PPS; and PA and PTT.

The engineering thermoplastic can be any of virgin or recycled material, or mixtures thereof. Examples of recycled material include recycled PET (r-PET) obtained from post-consumer (PCR) articles (e.g., bottles, containers, etc.) or from post-industrial recycled materials (PIR).

In embodiments, the engineering thermoplastic is added to the thermoplastic polymer composition in amounts of 60 - 98, or 60 - 90, or 60 - 95, or 65 - 95, or 65 - 90, or 68 - 95 wt.%, based on total weight of the thermoplastic polymer composition.

(Polyamide (PA)): In embodiments, the engineering thermoplastic is a PA selected from the group consisting of an aliphatic PA, an aromatic PA, copolymers, and mixtures thereof. Examples of the PA include polyphthalamide (PPA), polyarylamide (PAA), poly(metaxylylene adipamide), amorphous semiaromatic PA, poly(paraphenylene terephthalamide), and the like.

(Polyphthalamide (PPA)): In embodiments, the engineering thermoplastic is a PPA obtained by polycondensation between at least one diacid and at least one diamine. The PPA can be a block copolymer or a random copolymer.

In embodiments, the PPA has at least 45 mol% of the diacid portion of the repeating unit in the PPA is terephthalic acid and/or isophthalic acid, or at least 50 mol%, or at least 55 mol% based on total mol of the PPA. Other suitable diacids can be selected from adipic acid, sebacic acid, dodecandioic acid, and mixtures thereof.

In embodiments, the diamine is an aliphatic diamine having 4 - 14, or 6 - 12 carbon atoms. Examples of suitable diamines include hexamethylenediamine, nonamethylenediamine, 2-methyl-octamethylenediamine, 2-methyl pentamethylene diamine, decamethylenediamine, and mixtures thereof.

In embodiments, the PPA has a carbon-to-amide (C/CONH) molar ratio of at least 8.1, or > 8.2, or > 8.4, or > 9, or 8 - 15, or 8.1 - 14, or 8.5 - 13, or 9 - 12.

In embodiments, the PPA is selected from the group consisting of PPA6T/61; PPA6T/66; PPA6T/6; PPA6T/61/66; PPA10,T/10,I; PPA10,T; PPA9,T; and mixtures thereof. For example, in the term "6T/x," x denotes one or more comonomers.

In embodiments, the PPA comprises one or more units of 2-methylpentamethylene adipamide, hexamethylene sebacamide, hexamethylene azeleamide, hexamethylene dodecamethylamide, hexamethylene cyclohexanedicarboxylamide, dodecamethylene adipamide, hexamethylene terephthalamide units, hexamethylene adipamide units, hexamethylene isophthalamide units, and mixtures thereof.

In embodiments, the PPA comprises hexamethylene terephthalamide units, or hexamethylene terephthalamide units and hexamethylene adipamide units, optionally including hexamethylene isophthalamide units. Hexamethylene terephthalamide units can be present in amounts of at least 50 mol%, or 40 - 90 mol%; or 10 - 50 mol% of hexamethylene adipamide units; and 0 - 30 mol% of hexamethylene isophthalamide units.

In embodiments, the PPA has a melting point of > 290°C, or > 295°C, or > 300°C, or > 310°C, or < 380°C. In embodiments, the PPA has a glass transition temperature of > 80°C, or > 90°C, or > 100°C, or < 220°C.

In embodiments, the PPA has an inherent viscosity of > 0.4, or > 0.6, or > 0.8, or < 2.0, measured at 30°C in a 60/40 phenol/tetrachloroethylene mixture at a concentration of 0.4 g/dl.

(Polyphenylene oxide (PPO)): In embodiments, the engineering thermoplastic is a PPO including oligomers, polymers, and mixtures thereof.

Examples of the PPO include poly(2,6-dimethyl-1,4-phenylene)ether; poly(2,3,6-trimethyl-1,4-phenylene)ether; poly(2,6-diethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene)ether; poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene)ether; poly(2,6-dibromo-1,4-phenylene)ether; poly(3-bromo-2,6-dimethyl-1,4-phenylene)ether; copolymers and mixtures thereof.

In embodiments, the engineering thermoplastic is a PPO oligomer having a number average molecular weight (Mₙ) of 0.500 - 7, or 0.750 - 4 kg/mol and a weight average molecular weight (M_{w}) of 0.500 - 15 or 1.5 - 9 kg/mol.

In embodiments, the PPO oligomer has an intrinsic viscosity of 0.03 - 1, or 0.35 - 1, or 0.25 - 0.70, or 0.35 - 0.55, or 0.35 - 0.50, or 0.03 - 0.13, or 0.05 - 0.10, or 0.10 - 0.15 dL/g, measured at 25°C in chloroform using an Ubbelohde viscometer.

In embodiments, the PPO has a number average molecular weight (Mₙ) of 5 - 75, or 3 - 40, or 10 - 50 kg/mol. In embodiments, the PPO has a polydispersity index (PDI) of 1 - 7, or 2 - 5.

In embodiments, the PPO has an intrinsic viscosity of > 0.10, or > 0.20, or < 4, or 0.1 - 0.9, or 0.2 - 0.6, or 0.29 - 0.48 dL/g, measured at 25°C in chloroform using an Ubbelohde viscometer.

The PPO can be functionalized with hydroxyl, vinyl, isocyanate, anhydride, carboxylic acid, carboxylic ester, urethane, amino, phosphino, epoxy, silane, acrylate, methacrylate, and combinations thereof. In embodiments, the PPO has 1.2 to 2.8 phenolic hydroxy groups per molecule. The PPO can have a polydispersity index of 1.2 - 3, and intrinsic viscosity of 0.03 - 0.2 deciliter per gram.

(Polyethylene terephthalate (PET)): In embodiments, the engineering thermoplastic is a PET obtained by an acid component (e.g., terephthalic acid) or an ester-forming derivatives thereof and a glycol component (e.g., ethylene glycol) or an ester-forming derivatives thereof.

The PET can be obtained by using any additional alkylene glycol apart from ethylene glycol. Examples of alkylene glycols include 1,2-propanediol, 1,4-butanediol, 1,5-pentane diol, neopentyl glycol, hexamethylene glycol, octamethylene diol, nonyl methylene glycol, decamethylene glycol, 1,3-propane diol, 2-methyl-1,3-propanediol, 3-methyl-1,5-pentanediol, 2-methyl-octane diol, diethylene glycol, triethylene glycol, dipropylene glycol, tripropylene glycol, dibutylene glycol, tri-butylene glycol, poly(oxy)ethylene glycol, polytetramethylene glycol, 1,4, or 1,3-cyclohexanedimethanol, 1,2-cyclohexanedimethanol, 1,1-cyclohexanedimethanol, 2-methyl-1,1-cyclohexane diol, cyclohexane diol, cyclo decane diol, tricyclodecanedimethanol, 2,2 norbornanedimethanol, 3-methyl-2,2-norbornanedimethanol, 2,3 norbornanedimethanol, 2,5 norbornanedimethanol, 2,6 norbornanedimethanol, adamantanedicarboxylic methanol, 1,3-dimethyl-5,7-adamantanedicarboxylic methanol, 1,3-adamantane-diol, 1,3-alicyclic diols such as 5,7-dimethyl adamantane-diol, bis(4-ω- hydroxyalkyl)phenyl, bis(ω-hydroxyalkyloxy) naphthalene, 2,2-bis(4-ω-hydroxyalkyloxy phenyl)propane, bis(4-ω-hydroxyalkyloxy phenyl)one diol containing an aromatic group benzene, and mixtures thereof.

Examples of dicarboxylic acid include phthalic acid, isophthalic acid, 1,4-naphthalene dicarboxylic acid, 1,5-naphthalene dicarboxylic acid, 2,6-naphthalene dicarboxylic acid, 2,7-naphthalene dicarboxylic acid, diphenyl dicarboxylic acid, diphenyl ether dicarboxylic acid, diphenyl sulfone dicarboxylic acid, di-carboxy phenoxy ethane, diphenyl ketone dicarboxylic acid, cyclopentane dicarboxylic acid, 2,3-flange carboxymethyl acid, 2,4-furandicarboxylic acid, 2,5-furandicarboxylic acid, 3,4-furandicarboxylic acid, hexahydroterephthalic acid, cyclo decanedicarboxylic acid, di tricyclodecane acid, tricyclodecane alicyclic dicarboxylic acids, oxalic acid, malonic acid, succinic acid, glutaric acid, adipic acid, pimelic acid, suberic acid, azelaic acid, sebacic acid, trimellitic acid, trimesic acid, pyromellitic acid, tricarballylic acid, gallic acid, and mixtures thereof.

In embodiments, the PET comprises ethylene terephthalate units in amounts of > 80, or > 85, or > 90 mol%, based on total mol of the PET, remainder being a C₃-C₆ glycol (e.g., propylene glycol, hexamethylene glycol, tetramethylene glycol, etc.) and/or a dicarboxylic acid (e.g., isophthalic acid, naphthalene-2,6-dicarboxylic acid, etc.) units.

In embodiments, the PET has an intrinsic viscosity of 0.4 - 0.9, or 0.45 - 0.8, measured at 35°C in ortho-chlorophenol.

In embodiments, the PET is a recycled PET (r-PET). In embodiments, the thermoplastic polymer composition comprises a mixture of a virgin PET and r-PET in a weight ratio of 1:10 to 10:1, or 1:8 to 8:1, or 1:5 to 5:1, or 1:3 to 3:1, or 1:1.

(Polytrimethylene Terephthalate (PTT)): In embodiments, the engineering thermoplastic is a PTT obtained by polycondensation reaction between terephthalic acid (or its dimethyl ester, dimethyl terephthalate) and 1,3-propane diol. The polymerization involves esterification (or transesterification) followed by polycondensation under vacuum to form the desired molecular weight chains.

In embodiments, the PTT has a tensile strength at yield of > 20, or > 30, or < 80, or 20 - 80, or 25 - 70, or 30 - 60 MPa, measured according to ISO 527-1/-2.

In embodiments, the PTT has an elongation at break of > 5%, or > 10%, or < 70%, or 5 - 70%, or 10 - 50%, or 5 - 25%, measured according to ISO 527-1/-2.

In embodiments, the PTT has an elongation at yield of > 1%, or > 3%, or < 25%, or 1 - 25%, or 2 - 15%, or 3 - 10%, measured according to ISO 527-1/-2.

In embodiments, the PTT has a tensile modulus of > 0.5, or > 1.0, or < 10, or 0.5 - 10, or 1 - 5 GPa, measured according to ISO 527-1/-2.

In embodiments, the PTT has a flexural modulus of > 0.5, or > 1.0, or < 10, or 0.5 - 10, or 1 - 5 GPa, measured according to ISO 178.

In embodiments, the PTT has a Notched Izod impact of > 5, or > 10, or < 50, or 5 - 50, or 10 - 30 kJ/m², measured according to ISO 180/1A.

In embodiments, the PTT has a Notched Charpy impact of > 1, or > 1.5, or < 20, or 1 - 20, or 1.5 - 10 kJ/m², measured according to ISO 180/1eA.

(Polyphenylene sulfide (PPS)): In embodiments, the engineering thermoplastic is a PPS including those having a relatively low molecular weight as disclosed in the U.S. Pat. No. 3,354,129; and those having relatively high molecular weight as disclosed in U.S. Pat. No. 3,919,177. The PPS can be linear or branched polymer based on desired properties. Substantially linear PPS having a relatively high molecular weight is preferred in applications requiring the toughness of the higher molecular weight PPS.

In embodiments, the PPS is a low molecular weight PPS ("LMWPPS"), having a number average molecular weight (Mₙ) of 2 - 10, or 5 - 9, or 7 - 8.5 kg/mol. In embodiments, the LMWPPS has a weight average molecular weight (M_{w}) of 2 - 40, or 20 - 35, or 30 - 34 kg/mol.

In embodiments, the PPS is a high molecular weight PPS ("HMWPPS") having a Mₙ of 11 - 100, or 25 - 50, or 27 - 35 kg/mol. In embodiments, the HMWPPS has a M_{w} of 55 - 150, or 80 - 120, or 85 - 100 kg/mol.

In embodiments, the PPS is filled / reinforced with materials such as glass or fillers, in amounts of < 65, or 10 - 50, or 20 - 45 wt.% of total weight of the PPS. Examples of fillers include minerals such as calcium carbonate, calcium sulfate, talc, mica, and the like. Examples of glass fillers include commercially available glass fillers, e.g., boron silicate glass or aluminum silicate glass, glass fibers, and glass beads as reinforcing agents for polymeric blends. The PPS can be un-filled unless stated otherwise.

(Optional Oil Extended Hydrogenated Styrenic Block Copolymer (OE-HSBC): In embodiments, the thermoplastic polymer composition further comprises an oil extended HSBC, which is obtained by combining a hydrogenated styrenic block copolymer (HSBC') with a suitable amount of at least one oil. The HSBC' for use in making OE-HSBC can be the same or different from the HSBC precursor for use in making the e-HSBC, with the description for the HSBC is as above for the HSBC precursor before epoxidation to form e-HSBC.

In embodiments, the OE-HSBC has a weight ratio of the HSBC' to oil ranging from 1:5 to 5:1, or 1:4 to 4:1, or 1:3 to 3:1, or 1:2 to 2:1, or 1:1.

In embodiments, the oil is selected from the group consisting of hydrocarbon oil, vegetable oil, synthetic oil, and mixtures thereof. Examples of oils include naphthenic oils, mineral oil, soybean oil, cottonseed oil, castor oil, palm oil, linseed oil, coconut oil, sunflower oil, corn oil, olive oil, peanut oil, rapeseed oil, sesame oil, rice bran oil, jatropha oil, polyalphaolefins, silicone oils, and mixtures thereof.

In embodiments, the oil is transesterified or epoxidized having a degree of epoxidation of 2 to 10%, or 3 to 8%.

In embodiments, the OE-HSBC has a general structure of S-E/B-S having a RU of 0.001 - 0.2 meq/g; a butylene unit ("B") content of 30 - 50; a total VAC of 20 - 40 wt.%; a Mₚ of block "S" of 15 - 40 kg/mol; a Mₚ of block copolymer of 220 - 350 kg/mol; and diene units in each block "R" have a hydrogenation level of 85 - 98%.

In embodiments, the OE-HSBC, if added, is in amounts of up to 20 wt.%, or 1 - 20, or 3 - 18, or 5 - 15, or 1 - 12 wt.%, based on total weight of the thermoplastic polymer composition.

(Optional Impact Modifiers): In embodiments, the thermoplastic polymer composition further comprises an impact modifier other than the e-HSBC and or OE-HSBC. Examples of suitable impact modifiers include elastomeric copolymers such as ethylene-propylene diene polymers (EPDMs) that can be optionally functionalized with epoxy, anhydride, ortho-ester, oxazoline, sulfonate, or phosphonate groups; carboxylated ethylene-propylene rubbers, silicone rubber, ethylene-acrylic rubber, ethylene-propylene copolymer rubber, ethylene-propylene-diene terpolymer rubber, poly(butyl acrylate), styrenic block copolymers (SBCs), and mixtures thereof.

In embodiments, additional impact modifier, if present, is in amounts of up to 20 wt.%, or 0.1 - 10, or 0.5 - 5, or 1 - 3 wt.%, based on total weight of the thermoplastic polymer composition.

(Optional Additives): In embodiments, the thermoplastic polymer composition further comprises at least an additive selected from the group consisting of activators, curing agents, stabilizers, neutralizing agents, thickeners, coalescing agents, slip agents, release agents, antimicrobial agents, antioxidants, antiozonants, color change pH indicators, tackifiers, cross-linking agents, UV absorbers, catalysts, fillers, fibers, flame retardants, viscosity modifiers, wetting agents, deaerators, toughening agents, heat stabilizers, light stabilizers, lubricants, flow modifiers, drip retardants, antistatic agents, processing aids, dyes, pigments, colorants, plasticizers, lubricants, and mixtures thereof.

In embodiments, the additive is used in amounts of up to 10 wt.%, or 0.1 - 10, or 0.1 - 5, or 0.5 - 5, based on total weight of the thermoplastic polymer composition.

(Thermoplastic Polymer Compositions): In embodiments, based on total weight of the thermoplastic polymer composition, comprises: (a) 60 to 98 wt.% of an engineering thermoplastic, (b) 2 to 40 wt.% of an e-HSBC, (c) up to 20 wt.% of an OE-HSBC; and (d) up to 10 wt.% of at least an additive; alternatively (a) 68 to 95 wt.% of engineering thermoplastic, (b) 5 to 32 wt.% of the e-HSBC, (c) up to 20 wt.% of an OE-HSBC; and (d) up to 10 wt.% of at least an additive.

(Preparation of Thermoplastic Polymer Composition): The composition can be prepared by mixing predetermined amounts components by means of known processing equipment, e.g., a mixer, or by melt-kneading by means of an extruder or kneader, and, if necessary, by compounding / making into pellets for further processing for molded articles.

In embodiments, the thermoplastic polymer composition is prepared by using twin screw extruder at a temperature of > 200°C, or > 230°C, or 200 - 350°C, or 220 - 340°C.

The thermoplastic polymer composition, after preparation, can be used to make articles via known methods, e.g., injection molding, blow molding, extrusion molding, or other known means.

(Properties): The thermoplastic polymer composition exhibits balanced properties, including toughness, stiffness, and processability for use in high-performance applications.

In embodiments, the thermoplastic polymer composition has a Notched Izod impact of > 2, or < 50, or 2 - 50, or 3 - 45, or 4 - 40, or 5 - 35, or 2 - 35, or 5 - 50 KJ/m², measured at 21°C according to ASTM D256.

In embodiments, the thermoplastic polymer composition has a flexural modulus of > 1.5, or > 2, or < 10, or 1.5 - 10, or 1.8 - 8, or 2.0 - 6, or 1.5 - 6, or 2.0 - 10 GPa, measured according to ASTM D790.

In embodiments, the thermoplastic polymer composition has a tensile strength at break of > 40, or > 50, or < 150, or 40 - 150, or 45 - 120, or 50 - 100, or 40 - 80 GPa, measured according to ASTM D638.

In embodiments, the thermoplastic polymer composition has an elongation at yield of > 4%, or < 30%, or 4 - 30%, or 5 - 25%, or 6 - 20%, or 4 - 15%, or 6 - 30%, measured according to ASTM D638.

In embodiments, the thermoplastic polymer composition has an elongation at break of > 4%, or < 30%, or 4 - 30%, or 5 - 25%, or 6 - 20%, or 4 - 15%, or 6 - 30%, measured according to ASTM D638.

(Applications): The thermoplastic polymer composition can be used to form articles such as electronic components, e.g., connectors, bobbins, coils, relays, etc. Other applications include automotive under-hood parts, automotive fuel lines, switches and brushes, electrical fittings, thermal devices, appliance motor parts, computer parts, fax gears and guards, pumps, and housings. Other uses exist in, for example, aerospace, military, recreational vehicles, and electrical applications.

(Examples): The following illustrative examples are intended to be nonlimiting.

The following test methods are used.

The synthesis of e-SBC was characterized by proton nuclear magnetic resonance spectroscopy (1H NMR; Varian 500 MHz spectrometer, 23°C) with CD₂Cl₂ as the solvent.

The following components were used in the examples:

PPA-1 is a polyphthalamide having density 1.350 g/cm³, T_{g} 123°C, melting point 313°C, tensile strength of 83 MPa, tensile modulus of 2.8 GPa, tensile elongation 11%, Notched Izod 13 kJ/m², from Syensqo.

PET-1 is a recycled polyethylene terephthalate from Burcham International as Burcham 80 IV r-PET.

PTT-1 is a polytrimethylene terephthalate (PTT) having tensile strength at yield 35 MPa, elongation at break 15%, elongation at yield 5%, tensile modulus 1.6 GPa, flexural modulus 1.6 GPa, Notched Izod impact 18 kJ/m², and Notched Charpy impact 2.2 kJ/m², from DuPont.

PA-1 is polyamide-6 from Bridgeport.

PPS-1 is a polyphenylene sulfide having melting temperature 285°C, T_{g} 90°C, tensile strength at break 90 MPa, and flexural strength 3800 MPa, from Fortron.

PPO-1 is polyphenylene oxide having T_{g} 214°C, intrinsic viscosity 0.33 dl/g, from SABIC.

HSBC-1 is a poly(styrene-ethylene/butylene-styrene) (S-E/B-S) copolymer having MFR of 6 g/10 min at 230°C/5 kg load, VAC of 30 wt.%, butylene unit ("B") content of 35 to 60 wt.%, block "S" Mₚ of 7 kg/mol, block copolymer Mₚ of 77 kg/mol, and RU in the range of 2.4 to 3.9 meq/g.

HSBC-2 is a poly(styrene-ethylene/butylene-styrene) (S-E/B-S) copolymer having MFR of < 1 g/10 min at 230°C/5 kg load, VAC of 33 wt.%, butylene unit ("B") content of 41 wt.%, block "S" Mₚ of 27 kg/mol, block copolymer Mₚ of 270 kg/mol, and RU of 0.15 meq/g.

(Example 1): Preparation of e-HSBC. HSBC-1 was dissolved in cyclohexane at 25°C, and performic acid, which was prepared separately from formic acid and hydrogen peroxide (1.0:0.5 molar), was added to the solution. The performic acid was introduced in six equal portions over the course of the epoxidation reaction. The reaction was conducted at 50°C for 8 hours, after which the reaction mixture was neutralized using a 10% aqueous sodium bicarbonate solution. The product was precipitated in methanol and analyzed using ¹H NMR spectroscopy to determine the epoxy content. Various HSBC-1 samples with differing butylene unit ('B') contents and RUs were used to achieve varying amounts of epoxy functional groups, as shown in Table 1.

(Example 2): Preparation of OE-HSBC. 100 g of HSBC-2 was combined with 134 g of Drake oil 34 (mineral oil). The mixture was made homogenized by shaking the container and then left to stand for 24 hours at 25°C. The resulting oil-extended HSBC (OE-HSBC-2a) was used to prepare compositions.

**Table 1**

| Polymers | RU (meq/g) | Butylene unit ("B") content (wt.%) | H₂ level (%) | E. groups (wt.%) |
|---|---|---|---|---|
| e-HSBC-la | 2.4 | 36 | 82 | 5 |
| e-HSBC-1b | 2.4 | 36 | 82 | 10 |
| e-HSBC-1c | 3.8 | 37 | 71 | 20 |
| e-HSBC-1d | 3.9 | 60 | 71 | 20 |
| OE-HSBC-2a | 0.15 | 41 | > 95 | - |

H₂ level: hydrogenation level of diene units in block "R"; E. groups: epoxy functional groups.

(Examples 3 - 19): Thermoplastic polymer compositions were prepared by compounding and injection molding of the components by using a benchtop micro compounder Xplore ^{™} MC40. The extruder melt temperature was maintained between 260 to 330°C during compounding. CEx-1 to CEx-5 are comparative examples. Tables 2-4 show compositions and respective properties.

**Table 2**

| Components | CEx-1 | Ex-3 | Ex-4 | Ex-5 | Ex-6 | Ex-7 | Ex-8 | Ex-9 | Ex-10 |
|---|---|---|---|---|---|---|---|---|---|
| PPA-1 (wt.%) | 99.90 | 89.90 | 79.90 | 69.90 | 89.90 | 79.90 | 69.90 | 79.90 | 79.90 |
| e-HSBC-1b (wt.%) | - | 10 | 20 | 30 | - | - | - | - | - |
| e-HSBC-1c (wt.%) | - | - | - | - | 10 | 20 | 30 | - | - |
| e-HSBC-1c/e-HSBC-1d (80/20) (wt.%) | - | - | - | - | - | - | - | 20 | - |
| e-HSBC-1c/e-HSBC-1d (50/50) (wt.%) | - | - | - | - | - | - | - | - | 20 |
| Irganox 1010 (wt.%) | 0.1 | 0.1 | 0.1 | 0.1 | 0.1 | 0.1 | 0.1 | 0.1 | 0.1 |

| Properties | | | | | | | | | |
|---|---|---|---|---|---|---|---|---|---|
| Notched Izod Impact at 21°C (KJ/m²) | 5.2 | 5.0 | 13.2 | 12.3 | 11.2 | 15.8 | 28.2 | 19.7 | 15.7 |
| Flex Modulus (GPa) | 3.5 | 3.0 | 1.6 | 1.5 | 2.9 | 2.4 | 2.0 | 2.2 | 2.4 |

**Table 3**

| Components | CEx-2 | Ex-11 | Ex-12 | CEx-3 | Ex-13 |
|---|---|---|---|---|---|
| PET-1 (wt.%) | 99.90 | 94.90 | 94.90 | - | - |
| PA-1 (wt.%) | - | - | - | 45 | 43 |
| PTT-1 (wt.%) | - | - | - | 54.90 | 51.90 |
| e-HSBC-1a (wt.%) | - | 5 | - | - | - |
| e-HSBC-1c (wt.%) | - | - | 5 | - | 5 |
| Irganox 1010 (wt.%) | 0.1 | 0.1 | 0.1 | 0.1 | 0.1 |

| Properties | | | | | |
|---|---|---|---|---|---|
| Notched Izod Impact at 21°C (KJ/m²) | 2.5 | 2.8 | 2.9 | 2.3 | 3.0 |
| Flex Modulus (GPa) | 2.5 | 2.4 | 2.4 | 1.6 | 2.3 |
| Tensile strength at break (MPa) | - | - | - | 37.9 | 61.1 |
| Elongation at vield (%) | - | - | - | - | 6.6 |
| Elongation at break (%) | - | - | - | 4.5 | 6.0 |

**Table 4**

| Components | CEx-4 | Ex-14 | Ex-15 | Ex-16 | CEx-5 | Ex-17 | Ex-18 | Ex-19 |
|---|---|---|---|---|---|---|---|---|
| PPS-1 (wt.%) | 50 | 40 | 40 | 40 | 74.90 | 59.90 | 59.90 | 59.90 |
| PPO-1 (wt.%) | 49.90 | 39.90 | 39.90 | 39.90 | 25 | 20 | 20 | 20 |
| OE-HSBC-2a (wt.%) | - | 20 | - | 10 | - | 20 | - | 10 |
| e-HSBC-1c (wt.%) | - | - | 20 | 10 | - | - | 20 | 10 |
| Irganox 1010 (wt.%) | 0.1 | 0.1 | 0.1 | 0.1 | 0.1 | 0.1 | 0.1 | 0.1 |

| Properties | | | | | | | | |
|---|---|---|---|---|---|---|---|---|
| Notched Izod Impact at 21°C (KJ/m²) | 2.2 | 5.3 | 14.8 | 26.9 | 2.7 | 4.9 | 25.1 | 20.9 |
| Flex Modulus (GPa) | 2.9 | 2.4 | 2.1 | 2.1 | 2.8 | 2.3 | 2.0 | 2.0 |

As used herein, the term "comprising" means including elements or steps that are identified following that term, but any such elements or steps are not exhaustive, and an embodiment can include other elements or steps. As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A thermoplastic polymer composition comprising:
(a) 2 to 40 wt.% of an epoxidized product of a hydrogenated styrenic block copolymer, the hydrogenated styrenic block copolymer having a general structure selected from S-R, S-R-S, S-R-S-R, (S-R-S)ₙX, (S-R)ₙX, and mixtures thereof,
each block "S" is composed of vinyl aromatic units,
each block "R" is composed of hydrogenated diene units,
X is residue of a coupling agent, and n ≥ 2,
wherein the epoxidized hydrogenated styrenic block copolymer:
contains 1 to 35 wt.% epoxy functional groups, based on total weight of the block "R," and
has a residual unsaturation (RU) of 0.05 to 20 meq/g;
(b) 60 to 98 wt.% of an engineering thermoplastic selected from the group consisting of polyamide, polyphenylene oxide, polyethylene terephthalate, polytrimethylene terephthalate, polybutylene terephthalate, polyphthalamide, polyimides, polyetherimide, liquid crystal polymer, polycarbonate, polymethylmethacrylate, acrylonitrile butadiene styrene, polyoxymethylene, styrene-acrylonitrile, polyetherketone, polyetheretherketone, polyketone, polysulphone, and mixtures thereof; and
(c) up to 10 wt.% of at least an additive; and
(d) up to 20 wt.% of an oil extended hydrogenated styrenic block copolymer; wherein all weight percentages are based on total weight of the thermoplastic polymer composition.

2. The thermoplastic polymer composition of claim 1, wherein the block "R" is selected from any of E/B, EP/MB, and E/B/EP/MB; wherein
each block E/B composed of ethylene ("E") units and butylene ("B") units;
each block EP/MB composed of ethylene-propylene (EP) units and methylene-butylene (MB) units; and
each block E/B/EP/MB composed of ethylene ("E") units, butylene ("B") units, ethylene-propylene (EP) units, and methylene-butylene (MB) units.

3. The thermoplastic polymer composition of claim 2, wherein the block "R" is E/B having a butylene unit ("B") content of 30 to 65 wt.%, based on total weight of the block "R".

4. The thermoplastic polymer composition of any of claims 1-2, wherein the thermoplastic polymer composition has:
a Notched Izod impact of > 2 KJ/m², measured at 21°C according to ASTM D256; and
a flexural modulus of > 1.5 GPa, measured according to ASTM D790.

5. The thermoplastic polymer composition of any of claims 1-2, wherein the thermoplastic polymer composition has:
a tensile strength at break of > 40 GPa;
an elongation at yield of > 4%; and
an elongation at break of > 4%, all are measured according to ASTM D638.

6. The thermoplastic polymer composition of any of claims 1-2, wherein the engineering thermoplastic is selected from the group consisting of: polyamide, polyphenylene oxide, polyethylene terephthalate, polytrimethylene terephthalate, and polybutylene terephthalate.

7. The thermoplastic polymer composition of any of claims 1-2, wherein the engineering thermoplastic is a blend of two engineering thermoplastics selected from the group consisting of: polyphenylene oxide and polyphenylene sulfide, polyamide and polyphenylene sulfide, polyamide and polyethylene terephthalate, polyamide and polyphenylene oxide, polyamide and polytrimethylene terephthalate, and polyamide and polybutylene terephthalate, in a weight ratio of 1:5 to 5:1.

8. The thermoplastic polymer composition of claim 7, wherein the blend of two engineering thermoplastics is selected from any of: polyphenylene oxide and polyphenylene sulfide, and polyamide and polytrimethylene terephthalate; and wherein
the polyphenylene oxide has an intrinsic viscosity of > 0.10 dl/g;
the polyphenylene sulfide has a tensile strength at break of > 50 MPa; and
the polytrimethylene terephthalate has a tensile strength at yield of > 20 MPa.

9. The thermoplastic polymer composition of any of claims 1-2, wherein the epoxidized hydrogenated styrenic block copolymer is a mixture of a first epoxidized hydrogenated styrenic block copolymer and a second epoxidized hydrogenated styrenic block copolymer;
wherein
the first epoxidized hydrogenated styrenic block copolymer has a butylene unit ("B") content of < 45 wt.%, and
the second hydrogenated styrenic block copolymer has a butylene unit ("B") content of > 45 wt.%; and
wherein
a weight ratio of the first epoxidized hydrogenated styrenic block copolymer to the second epoxidized hydrogenated styrenic block copolymer in the mixture ranges from 1:10 to 10:1.

10. The thermoplastic polymer composition of any of claims 1-2, wherein
a molecular weight (Mₚ) of the block "S" is 5 to 50 kg/mol; and
a molecular weight (Mₚ) of the hydrogenated styrenic block copolymer is 100 to 500 kg/mol.

11. The thermoplastic polymer composition of any of claims 1-2, wherein the hydrogenated styrenic block copolymer has:
a vinyl aromatic unit content (VAC) of 10 to 50 wt.%; and
a residual unsaturation (RU) of 0.1 to 10 meq/g.

12. The thermoplastic polymer composition of any of claims 1-2, wherein the oil extended hydrogenated styrenic block copolymer is present in amount of 1 to 20 wt.%.

13. The thermoplastic polymer composition of claim 12, wherein the oil extended hydrogenated styrenic block copolymer comprises a hydrogenated styrenic block copolymer dissolved in an oil selected from the group consisting of hydrocarbon oil, vegetable oil, synthetic oil, and mixtures thereof, in a weight ratio of the hydrogenated styrenic block copolymer to oil ranging from 1:5 to 5:1.

14. The thermoplastic polymer composition of claim 13, wherein the hydrogenated styrenic block copolymer has a general structure of S-E/B-S; and wherein
the hydrogenated styrenic block copolymer has:
a residual unsaturation (RU) of 0.001 to 0.2 meq/g;
a butylene unit ("B") content of 30 to 50; and
a total vinyl aromatic unit content of 20 to 40 wt.%.

15. The thermoplastic polymer composition of claim 13, wherein the hydrogenated styrenic block copolymer has:
a molecular weight (Mₚ) of block "S" of 15 to 40 kg/mol;
a molecular weight (Mₚ) of the hydrogenated styrenic block copolymer of 220 to 350 kg/mol.
